# EUROPEAN PATENT APPLICATION

(11) **EP 2 267 612 A1**
(43) Date of publication of application: **29.12.2010**
(21) Application number: 09425248.3
(22) Date of filing: 26.06.2009
(51) Int. Cl.: G06F 17/24, G06F 17/22

(54) **Data management system with user recognition for partial data collection through web**

(71) Applicant: OneCube S.r.l., 27100 Pavia (IT)
(72) Inventor: Albertini, Michele, 20067 Paullo (MI) (IT)

(57) **Abstract**

The innovation consists in a system to manage data collection from an identified user, operating on a client, to a server web. The process takes place by filling a form. This system allows to save and to record filled fields, matching every single fields to a specific form, to a specific user and to a specific work session. In the case the work session expires before the final submitting, a new session can be started, the filled fields can be called back from a mass memory unit and the new session starts with those fields pre-loaded.

## Description

### APPLICATION FIELD

The application field of the present invention concerns that kind of application for which a user is connected to a server web to fill a form with personal data. As this kind of data are private data, usually there is a limited time session to fill out the form, this is in order to ensure safety.

### STATE OF THE ART

One of the common way to collect web user data, is tipically the system for which a client is connected to a web server by an identification process (for example a login process). At this point usually the user, on client side, must fill out a form with his own data (various kinds of data) in order to transmit the data themselves to the web server. It is the case of the various on line subscriptions or particulary on line applications, for example applications commonly called "home banking". Tipically data are characterized by the fact that they are personal or private ones. To ensure safety is commonly used a particular solution: a time limited work session. This is to avoid that data user could be seen by other people if user move away during the filling of the form. Moreover to avoid that other people could operate in the application taking advantage of user absence. The problem is that if the user wastes time during the filling of the form (for example he answers the phone) the session expires and he has to fill again the whole form. Infact, data filled before the final submit are not recorded by the system. So we can say that often to ensure safety by a time limited session creates an inconvenience for the user. To increase session time duration is not an optimal solution because it means to affect safety instances. By now there is not an optimal solution for this problem, as the matter of fact there are systems to save data that concern text editors but it is a different application field. The innovation of the present system is characterized by the fact that all the data filled before session time expires, are saved by the system itself and the user can find pre-loaded data in the new session. The system can works even in the absence of a login process, it is the case of anonymous user. Here the user can be identified by different devices, for example by transmitting cookies to client pc.

### DESCRIPTION

It is a system to manage in a more efficient way the web collection of data, from a user operating on client to a web server. In this cases commonly the user has to fill a form operating on client side. Thanks to this innovation if session time expires before the submitting (final subscription of the form), all the fields the user has already filled are saved by the system. The result is that in the new session the user has not to fill the form from the beginning.

The process begin with the user access to the site (user operates on a client). The following step is the identification of the user, it can be the case of a login process, for registered user, or can be the case of the request of trasmission of a cookie for anonymous user. Then there is the check of the login (or the trasmission of cookies from the server to the client). After the user identification, two processes start simultaneously: a positive feed back is send to user (for example "login ok") and on server side is created a data structure to identify that particulary user and that specific work session. At this point the user can choose the form he wants to fill and can start the compilation. Every time the user ends to fill a field of the form, this field is transmitted to server, associated with informations which identify the form and the field itself (so we have informations about the specific work session of the specific user matched with informations of specific fields of specific forms). At this point the server can records a data structure that reply the progressive filling of the form. These data are saved on a mass memory unit. So two possibilities are given:
- -the user ends the compilation of the form and submit it successfully;
- -session time expires before submitting (or submit fails);
in the last case it will be possible for the user to start a new session by a form with some fields pre-loaded (the same fields the user filled in the previous session ).

### DESRCIPTION OF FIGURES

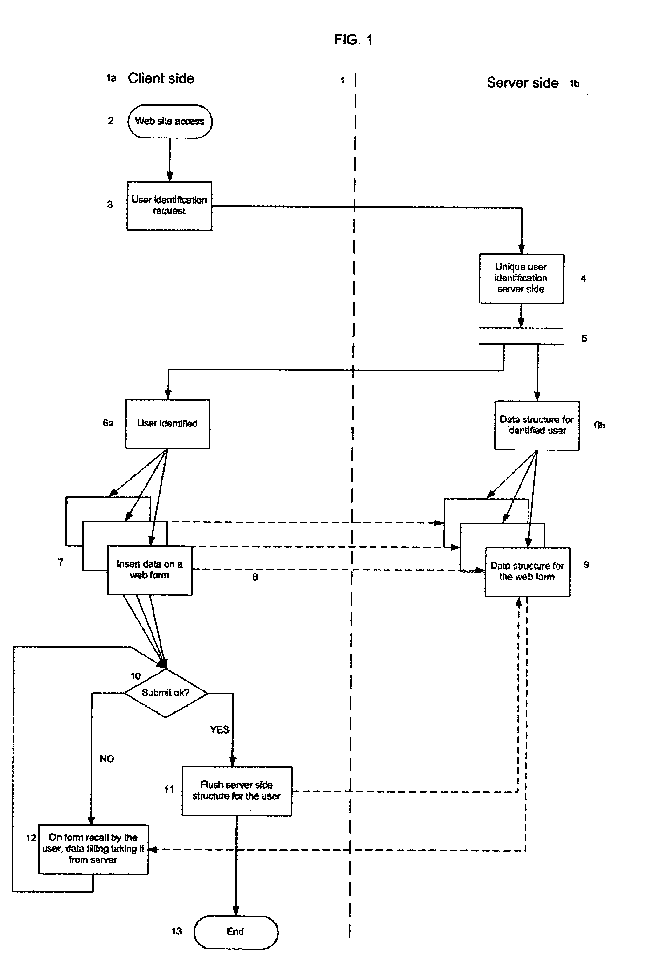

**Figure 1****:** the whole process is summarized in figure 1. Figure 1 is divided into two sections by a dashed line: section a represents operations on client side, section b represents operations on server side.
Fig. 1 (2): user enters the site.
Fig.1 (3): on client side a request for user identification is transmitted to the server I(ogin or request for a cookie).
Fig.1 (4): there is a check of identification request (check of login or transmission of cookie).
Fig.1 (5): the success of identifying procedure cause two simultaneously processes on the client side and on the server side, these processes are the following.
Fig.1 (6a): on client side there is a positive feed back of the login (for example "login ok").
Fig.1 (6b): on server side is created a data structure to identify that particulary user and that specific work session
Fig.1 (7): user starts to fill the form.
Fig.1 (8): every time the user ends to fill a field of the form, this field is trasmitted to the server associated with informations that identify the form and the field itself.
Fig.1 (9): every time a field is transmitted to the server the server itself creates a data structure to identify that particulary user and that specific work session (so we have informations about the specific work session of the specific user matched with informations of specific fields of specific forms).
Fig.1 (10): submit of the form.
Fig. 1 (11): the submit is successfully completed, go directly to fig. 1 (13)
Fig: 1 (12): the submit isn't successfully completed (wrong button, expiration of session, disconnection and so on). Now it's possible to start a new session getting some data pre-loaded.
Fig. 1 (13): end of the process.

## Claims

1. It is a process to manage data collection from a client to a web server, in which the user on the client is identified by a login. The data collection is set by a form to fill. **It is characterized in the fact that** the system can trace and records every filled field of the form. So that every filled field is matched to a specific form, a specific user and a specific work session. If the session expires before the user submit the form, a new session can be started with some fields pre-loaded. The same fields the user filled before session expired.

2. It is a process to manage data collection from a client to a web server as described in claim 1, **characterized in the fact that** the user is not identified by a login procedure but by informations transmitted from the server to the client (cookie).

3. It is a process to manage data collection from a client to a web server as claimed in any of previous claims, **characterized in the fact that** structures and processes to save partial fillings and to loads field filled in a previous session, present the same main features of those already described.
